# EUROPÄISCHE PATENTSCHRIFT

(11) **EP 4 155 543 B1**
(45) Veröffentlichungstag und Bekanntmachung des Hinweises auf die Patenterteilung: **22.07.2026**
(21) Anmeldenummer: 22197705.1
(22) Anmeldetag: 26.09.2022
(51) Int. Cl.: F04B 45/073

(54) **HOCHDRUCKVERDICHTER UND SYSTEM MIT EINEM HOCHDRUCKVERDICHTER**
HIGH-PRESSURE COMPRESSOR AND SYSTEM COMPRISING A HIGH-PRESSURE COMPRESSOR
COMPRESSEUR HAUTE PRESSION ET SYSTÈME COMPRENANT UN COMPRESSEUR HAUTE PRESSION

(30) Priorität: 28.09.2021 DE 102021125046
(43) Veröffentlichungstag der Anmeldung: 29.03.2023
(73) Patentinhaber: Loeffler, Joachim, 96524 Föritztal (DE)
(72) Erfinder: Löffler, Joachim, 96524 Föritztal (DE)
(74) Vertreter: Pröll, Jürgen

(56) Entgegenhaltungen:
- WO-A1-2006/113264
- WO-A1-2012/107756
- FR-A1- 2 085 490
- US-A- 2 245 546
- US-A- 2 869 468
- US-A- 3 062 153

## Beschreibung

Es werden ein Hochdruckverdichter und ein System mit einem Hochdruckverdichter beschrieben, die zur Verdichtung eines Gases oder Gasgemischs ausgebildet sind.

### Hintergrund

Unter "Hochdruck" wird gemäß dem allgemeinen technischen Verständnis für die Hochdruckverdichtung von Gasen und Gasgemischen bei einer Verdichtung ab 40 bar über dem atmosphärischen Druck gesprochen.

Der hierin beschriebene Hochdruckverdichter und das System können für die Hochdruckverdichtung von brennbaren oder oxidierenden Gasen oder Gasgemischen eingesetzt werden. Ein brennbares Gas ist bspw. Wasserstoff. Ein Beispiel für oxidierendes Gas ist Sauerstoff. Brennbare oder oxidierende Gasgemische können Wasserstoff und Sauerstoff enthalten.

Für verschiedene Anwendungen werden Gase und Gasgemische mit hohen Drücken benötigt. Teilweise liegen die Drücke im Bereich von mehreren hundert oder sogar über 1000 bar. So werden bspw. bei Anwendungen im Bereich von energieerzeugenden Einrichtungen oder für mobile Anwendungen Gase bzw. Gasgemische mit mehreren 100 bar benötigt. Üblicherweise wird bspw. Wasserstoff zur Zwischenlagerung in entsprechenden Behältern bei einem Druck von etwa 300 bar gelagert. Schwierigkeiten bestehen dabei in der Verdichtung der Gase bzw. Gasgemische, wobei konventionelle Lösungen Nachteile aufweisen.

### Stand der Technik

Aus der WO 2012/107756 A1 ist ein Gaskompressor, der eine Hochdruckflüssigkeitsquelle und einen Druckbehälter mit einem Gaseinlass für das zu komprimierende Gas, einem Gasauslass für das komprimierte Gas und einem Flüssigkeitseinlass für die Hochdruckflüssigkeit umfasst, bekannt. Ein vorgesehenes Sperrelement hat die Form eines aufblasbaren Beutels, der mit dem Flüssigkeitseinlass des Druckbehälters verbunden ist. Der aufblasbare Beutel kann so dimensioniert sein, dass er im aufgeblasenen Zustand den Innenraum des Druckbehälters einnimmt, um das Gas unter Druck zu setzen und gleichzeitig die schaltbare Entlüftung am Wassereinlassrohr zur Atmosphäre hin offen zu halten. Die innere Form und das Volumen des Druckbehälters können im Wesentlichen mit der äußeren Form und dem äußeren Volumen des aufblasbaren Wassersacks identisch sein. Der aufblasbare Beutel kann aus beliebigen flexiblen Materialien oder Verbundmaterialien wie verstärktem Gummi, faserverstärktem Kunststoff usw. bestehen.

Aus der US 3 062 153 A ist ein Verfahren und ein Mittel zum Pumpen verschiedener Stoffarten bekannt. Es wird eine neuartige Pumpenform gezeigt, die insbesondere zum Ausstoßen von Flüssigkeiten oder anderen Stoffen aus einem nicht unter Druck stehenden, lagerfähigen Behälter, geeignet ist, und die in der Linie bei einer Verarbeitungsanlage zum Mischen oder Kombinieren von Chemikalien verwendet werden kann, die nicht für das direkte Pumpen mit herkömmlicheren Mitteln geeignet sind oder aufgrund von Kontamination oder aus anderen Gründen leicht von einer Quelle auf eine andere übertragbar sind, indem Flaschendruck oder Druck oder Vakuum verwendet werden, die von anderen Standardgeräten abgeleitet werden.

Aus der WO 2006/113246 A sind Beschichtungsapplikatoren und insbesondere elektrostatische Applikatoren, die zum Auftragen einer Vielzahl unterschiedlicher Beschichtungen in schneller Folge geeignet sind, bekannt. In einen Kanister mit einer äußeren festen Hülle und mit festem Volumen ist eine flexible Barriere eingebracht, die eine gemeinsame Trennlinie zwischen einem variablen ersten Volumen auf einer Seite der Barriere und einem variablen zweiten Volumen auf der gegenüberliegenden Seite der Barriere bildet. Die Barriere ist mit der Hülle verbunden, so dass Oberflächen der Hülle und der Barriere nur in einem der Volumina freiliegen, selbst wenn sich die Größe der Volumina ändert. Ein Aktuator bewegt die Barriere, um die Größe des ersten und zweiten Volumens zu ändern, und ein Beschichtungsmaterialpfad fließt in eines der Volumina hinein und aus diesem heraus.

Aus der FR 2 085 490 A ist eine Druckluftgeneratorvorrichtung, bekannt, welche die Druckschwankungen nutzt, die in einem Doleau-Verteilungsnetz durch die alleinige Betätigung der Verteilungselemente wie Hähne, Ventile, Ventile, automatisch oder gesteuert, erzeugt werden.

Bekannte Verdichter für Gas und Gasgemische sind bspw. als Kolbenverdichter ausgebildet und weisen einen linear beweglichen Kolben auf, der ein in einen Aufnahmeraum eingebrachtes Gas oder Gasgemisch durch Verkleinerung des Aufnahmeraums komprimiert und somit verdichtet. Das verdichtete Gas oder Gasgemisch wird dann ab- und einer Anwendung zugeführt.

Nachteilig sind solche Kolbenverdichter insbesondere deshalb, weil aufgrund des beweglichen Kolbens eine Dichtung vorgesehen sein muss, die den Kolben gegenüber einer den Aufnahmeraum begrenzenden Wand abdichtet. Diese Dichtung kann aber zum einen keine vollständige Abdichtung bereitstellen, weil permanent eine Bewegung zwischen den abzudichtenden Komponenten vorliegt, und unterliegt aufgrund der häufigen Bewegung einem hohen Verschleiß.

### Aufgabe

Demgegenüber besteht die Aufgabe darin, eine Lösung zur Hochdruckverdichtung von Gasen und Gasgemischen anzugeben, welche sowohl die Nachteile des Stands der Technik behebt als auch eine Alternative zum Stand der Technik bereitstellt, die einfach ausgebildet ist und bei geringem Bauraum eine hohe Verdichtung von Gasen und Gasgemischen erlaubt. So soll eine Lösung zur Hochdruckverdichtung bereitgestellt werden, welche keine beweglichen Komponenten aufweist, die primär zur Verdichtung dienen und mit der Umgebung in Verbindung stehen.

### Lösung

Die vorstehend genannte Aufgabe wird durch einen Hochruck-Verdichter zur Verdichtung eines Gases oder Gasgemischs gelöst, aufweisend einen Druckbehälter, der mindestens eine Medienkammer und mindestens eine Verdichterbaugruppe umgibt, wobei die mindestens eine Verdichterbaugruppe aus mindestens einem Konturstab und mindestens einer Membran besteht, welche die mindestens eine Medienkammer von mindestens einem Verdichterraum trennt und der mindestens eine Konturstab mindestens einen ersten Anschluss zur Zu- und/oder Abfuhr eines Gases oder Gasgemischs aufweist, der in den mindestens einen Verdichterraum mündet, wobei der Druckbehälter mindestens einen zweiten Anschluss, zur Zu- und/oder Abfuhr eines Mediums aufweist, der in die mindestens eine Medienkammer mündet, wobei die mindestens eine Membran zur Verdichtung des in den mindestens einen Verdichterraums einleitbaren Gases oder Gasgemischs durch Einleitung eines Mediums in die mindestens eine Medienkammer verformbar ist

In einer vorteilhaften Ausgestaltung ist der Hochdruck-Verdichter als Schlauch-Membran-Verdichter ausgebildet und bewirkt somit eine Verdichtung des in die mindestens eine Medienkammer einleitbaren Gases oder Gasgemischs durch eine Verformung der mindestens einen Membran.

Vorteilhaft gegenüber Kolbenverdichtern weist ein Membran-Verdichter keine Dichtung auf, die mit beweglichen Komponenten in Kontakt treten, so dass sich keine Dichtigkeitsprobleme ergeben und eine fluidpartikelfreie Kompression erreicht wird. Daraus ergibt sich weiterhin der Vorteil, dass ein Membran-Verdichter verschleißärmer als ein konventioneller Kolbenverdichter ist, da die Anzahl der beweglichen Komponenten geringer ist. Ein weiterer Vorteil ist, dass ein Membran-Verdichter weniger Bauraum, als ein vergleichbarer Kolbenverdichter benötigt, um die gleiche Kompressionsrate zu erzielen.

Der Hochdruck-Verdichter ist so ausgebildet, dass die mindestens eine Membran in einer vorteilhaften Ausgangsstellung an dem mindestens einen Konturstab anliegt. Beim Einleiten des Gases oder Gasgemischs wird die mindestens eine Membran in Anlage mit der inneren Wand, der mindestens einen Gehäusehülse des mindestens einen Druckbehälters gebracht. Der mindestens ein aufgespannter Raum, welcher durch die Klemmstücke berandet ist, bildet den mindestens einen Verdichterraum aus. Das Volumen, welches der mindestens eine Verdichterraum einschließt, steht somit der Verdichtung zur Verfügung.

Nach dem Einleiten eines Gases oder Gasgemisches über den mindestens einen ersten Anschluss wird die Zufuhr unterbrochen und die Leitung abgeriegelt. Dann erfolgt die Kompression, wobei ein inkompressibleres Medium als das zu verdichtende Gas oder Gasgemisch, über den mindestens einen zweiten Anschluss in die mindestens eine Medienkammer eingeleitet wird. In vorteilhafter Ausgestaltung ist das Medium inkompressibel.

Als inkompressibel gelten flüssige Medien mit einem Kompessionsmodul von mindestens 1,0 GPa. In vorteilhafter Ausführung ist das Medium Wasser oder Hydraulik-Öl. In weiteren vorteilhaften Ausgestaltungen sind auch Gase als Medium denkbar.

Der Druck, der über das Medium auf die mindestens eine Membran ausgeübt wird, entspricht dem Druck auf der Seite des Gases oder Gasgemischs, so dass eine in der wesentlichen differenzdrucklose Kompression innerhalb des mindestens einen Druckbehälters des Hochdruck-Verdichters durchgeführt wird. Die im wesentlichen differenzdrucklose Kompression lässt in vorteilhafter Ausführung geringere Materialstärken der mindestens einen Membran zu, da diese keine weiteren Beanspruchungen außer Druckspannungen aufnimmt.

Bei der Kompression des Gases oder Gasgemischs, das in den mindestens einen Verdichterraum eingeleitet worden ist, wird der Druck auf die mindestens eine Membran von Seiten der mindestens einen Medienkammer durch das inkompressiblere Medium erhöht, so dass es zu einer Verformung der mindestens einen Membran in Richtung des mindestens einen Konturstab kommt, was dann zu einer Verdichtung des in dem mindestens einen Verdichterraum aufgenommenen Gases oder Gasgemischs führt.

Die mindestens eine Membran kann über das inkompressiblere Medium verformt werden, bis die mindestens eine Membran vollständig oder fast vollständig an dem mindestens einen Konturstab anliegt. Damit wird eine hohe Verdichtung erreicht, weil das Gas oder Gasgemisch nahezu um das gesamte Volumen des mindestens einen Verdichterraum komprimiert werden kann. Gegenüber bekannten Vorrichtungen wird somit eine höhere Verdichtung erzielt.

Die Verformung der mindestens einen Membran kann durch ein Dehnen der mindestens eine Membran erfolgen, wobei hierzu die mindestens eine Membran im Hinblick auf ihren Aufbau und/oder innere Struktur entsprechend gestaltet ist, damit die erforderliche Verformung erreicht wird.

Weitere vorteilhafte Ausgestaltungen ergeben sich aus Weiterbildungen, welche durch die Unteransprüche definiert sind.

In einer vorteilhaften Ausgestaltung der Erfindung nach Patentanspruch 2 kann der Hochdruck-Verdichter mindestens einen Druckbehälter mit zylinderförmigem Querschnitt aufweisen.

In einer weiteren vorteilhaften Ausgestaltung kann die Querschnittsfläche der mindestens einen Gehäusehülse und/oder der Flanschplatten in Form eines Polygons vorgesehen sein. Die Fertigung eines bspw. viereckigen Profils ist vorteilhaft gegenüber aufwändigerer Querschnitte.

In vorteilhafter Ausgestaltung nach Patentanspruch 3 kann der mindestens eine Druckbehälter des Hochdruck-Verdichters mehrteilig ausgeführt sein. Den zentralen Teil des Hochdruck-Verdichters bildet die mindestens eine Gehäusehülse, diese wird brandet durch stirnseitig angebrachte Flanschplatten. Um eine Abdichtung gegenüber der Umwelt zu ermöglichen, sind in den Flanschplatten Nuten sowie Ausnehmungen vorgesehen um die mindestens eine Gehäusehülse dichtend zu positionieren und zu fixieren.

In einer weiteren vorteilhaften Ausgestaltung der Erfindung können die Flanschplatten außerhalb der Ausnehmungen, welche zur Aufnahme der mindestens einen Gehäusehülse dienen, äquidistante Bohrungen entlang der Flanschplattenkontur aufweisen, wobei die sich gegenüberliegenden, durch die mindestens eine Gehäusehülse beabstandeten, Flanschplatten im montierten Zustand so ausgerichtet sind, dass die Bohrungen deckungsgleich positioniert sind, so dass Stangen, welche Bolzen oder Gewindestangen oder Schrauben sein können, durch diese Bohrungen führbar sind. Die Länge der Stangen ist so gewählt, dass sie zu beide Enden des mindestens einen Druckbehälters über die Flanschplatten hinausragen, dabei weisen die überstehenden Enden der Stangen jeweils ein Gewinde auf. Auf die Enden werden Muttern und Distanzscheiben geführt, womit die Flanschplatten mit der mindestens einen Gehäusehülse kraft- und formschlüssig sowie gasdicht mindestens eine Medienkammer einschließen. Auch eine direkte Verschraubung der Flanschplatten mit der Gehäusehülse kann in einer weiteren Ausgestaltung des Druckbehälters vorgesehen sein.

Die Flanschplatten sowie die mindestens eine Gehäusehülse bestehen aus Metall oder einer Metalllegierung oder einem Edelstahl bzw. eine Edelstahllegierung. In einer vorteilhafter Ausgestaltung bestehen die Flanschplatten und die mindestens eine Gehäusehülse aus einer Edelstahllegierung der Gruppe 316 L.

In einer weiteren vorteilhaften Ausgestaltung der Erfindung sind auch Materialien wie Kunststoffe zur Herstellung der Flanschplatten und der mindestens einen Gehäusehülse denkbar, sofern diese gasdicht sind und eine ausreichende Zugfestigkeit gegenüber dem Innendruck des Druckbehälters aufweisen.

In vorteilhafter Ausgestaltung des Hochdruck-Verdichters nach Patentanspruch 4 kann eine der Flanschplatten des mindestens einen Druckbehälters mindestens eine Bohrung aufweisen, worin mindestens ein Konturstab, welcher mindestens eine Verdichterbaugruppe aufnimmt, abdichtend positioniert ist.

In weiterer vorteilhafter Ausgestaltung der Erfindung kann der mindestens eine Druckbehälter weitere Anschlüsse zur Zu- und/oder Abfuhr eines Mediums, das zum Komprimieren eines Gases oder Gasgemischs dient, aufweisen. Es befindet sich der mindestens einen zweite Anschluss, welcher als Bohrung ausgeführt sein kann, zur Zu- und/oder Abfuhr eines Mediums, in mindestens einer Flanschplatte und/oder der mindestens einen Gehäusehülse.

Die mindestens eine Verdichterbaugruppe kann entlang mindestens eines Konturstabes angeordnet sein, wobei der mindestens eine Konturstab an einem Endbereich mit einer Flanschplatte gasdicht verbunden ist. An diesem Ende des mindestens einen Konturstabs ist mindestens ein erster Anschluss vorgesehen, welcher der Zu- und Abfuhr für das zu komprimierende Gas oder Gasgemisch dient. Der mindestens eine Konturstab ist im Wesentlichen ein zylinderförmiger Stab, welcher sich nahezu über die gesamte Länge des mindestens einen Druckbehälters erstreckt. In einer weiteren vorteilhafter Ausgestaltung der Erfindung kann der mindestens eine Konturstab auch ein Polygon im Querschnittsprofil aufweisen.

Ausgehend von der anschlussseitigen Innenwand der anschlussseitigen Flanschplatte kann der mindestens eine Konturstab in vorteilhafter Ausgestaltung ein Gewinde und einen aufweitenden konischen Bereich aufweisen, in der Mitte des mindestens einem Druckbehälters kann der mindestens eine Konturstab mindestens einen konkaven Bereich aufweisen, zum freien Ende des mindestens einen Konturstabs hin, kann dieser in vorteilhafter Ausgestaltung einen einschnürenden konischen Bereich sowie ein weiteres Gewinde aufweisen. Der mindestens eine erste Anschluss, welche der Gas- oder Gasgemischzu- und/oder -abfuhr dient, kann sich zentrisch, entlang des mindestens einen Konturstabs erstrecken. Entlang des Umfangs, zwischen dem aufweitend und dem einschnürend konischen Bereich sind weitere Bohrungen vorgesehen, diese können von dem mindestens einen ersten Anschluss ausgehen und münden in die mindestens eine Verdichterkammer, welche über die Membran aufgespannt wird.

In vorteilhaften Ausgestaltung kann der mindestens eine Konturstab Rillen entlang und/oder längs des Umfangs aufweisen, welche zum dem mindestens einen ersten Anschluss verlaufen. Vorteilhaft kann so das komprimierte Gas oder Gasgemisch besser aus dem Verdichterraum abgeführt werden.

In einer weiteren vorteilhafter Ausgestaltung nach Patentanspruch 5 kann die mindestens eine Membran in Form eines Schlauchabschnitts und/oder eines Schlauchsegments ausgestaltet sein.

In vorteilhafter Ausgestaltung nach Patentanspruch 6 kann die mindestens eine Membran auf und/oder an dem mindestens einen Konturstab angeordnet sein.

In vorteilhafter Ausgestaltung nach Patentanspruch 7 kann sich die mindestens eine Membran von dem sich aufweitenden konischen Bereich bis zum verjüngenden konischen Bereich des mindestens einen Konturstabs erstrecken. Die mindestens eine Membran wird über Konen geführt und mithilfe von aufschiebbaren Klemmstücken, welche eine Bohrung, komplementär der Konen des mindestens einen Konturstabs, aufweisen, verbunden. Die Klemmstücke, sind spiegelsymmetrisch auf dem mindestens einem Konturstab angeordnet. Mithilfe von Spannmuttern, welche auf den Gewinden, an den innenliegenden Randbereichen des mindestens einen Druckbehälters auf dem mindestens einen Konturstab vorgesehen sind, werden die Klemmstücke auf dem mindestens einen Konturstab fixiert und eine Flächenpressung erzeugt, die die mindestens eine Membran kraftschlüssig und gasdicht positioniert.

In vorteilhafter Ausgestaltung der Klemmstücke und des Konturstabs können die Oberflächen ein Zahnprofil oder vergleichbares zum Erhöhen des Kraft- und/oder Formschlusses aufweisen. In einer weiteren vorteilhaften Ausgestaltung der Erfindung sind nadelförmige Ausprägungen am Konturstab vorgesehen, welche im montierten Zustand die mindestens eine Membran durchfassen.

Um abrupte Querschnittsübergänge der mindestens einen Membran im aufgeblähten Zustand zu vermeiden sind die sich gegenüberliegenden innenliegenden Stirnflächen der Klemmstücke mit einer umlaufenden Fase versehen. In einer vorteilhaften Ausgestaltung der Fase kann diese Radien aufweisen, so dass der Übergang von Klemmstück zu Gehäusehülsen-Innenwand nahezu stetig verläuft.

In einer weiteren vorteilhaften Ausgestaltung können die Klemmstücke auch mehrteilig ausgeführt sein.

In vorteilhafter Ausgestaltung des Hochdruck-Verdichters nach Patentanspruch 8 kann die mindestens eine Membran aus einem polymerisierten Material bestehen. Vorteilhaft besteht die mindestens eine Membran aus einem Elastomer wie z.B. aus Ethylen-Propylen-Dien-Monomer, oder Fluorkarbon-Kautschuk. Vorteilhaft weist die Zusammensetzung des polymerisierten Materials eine hohe Elastizität und geringe Ermüdungserscheinungen in Folge der Lastzyklen auf.

In einer weiteren vorteilhaften Ausgestaltung kann vorgesehen sein, dass eine Flanschplatte eine Vielzahl von parallel angeordneten Konturstäben aufnimmt. Auch, dass an einem Konturstab mehrere Verdichterbaugruppen in Reihe anordenbar sind, kann in vorteilhafter Ausgestaltung vorgesehen sein.

Die vorstehend genannte Aufgabe wird weiterhin durch ein Verdichtersystem zur Hochdruckverdichtung eines Gases oder Gasgemischs gelöst, aufweisend mindestes einen Hochdruck-Verdichter, einen Niederdruck-Gas oder -Gasgemisch-Vorrat, einen Hochdruck-Gas oder -Gasgemisch-Vorrat, einen Medienvorrat und Fördermittel zum Fördern eines Gas oder Gasgemischs sowie eines inkompressibleren Mediums und Steuermittel zur Regelung des Durchflusses des Gas oder Gasgemischs und des inkompressibleren Mediums über zugehörige Leitungen, wobei
- der Hochdruck-Verdichter mindestens einen Druckbehälter aufweist, welcher mindestens eine Verdichterbaugruppe und mindestens eine Medienkammer umgibt,
- Die Verdichterbaugruppe an mindestens einem Konturstab angeordnet ist, welcher mindestens eine flexible Membran trägt, diese spannt im aufgeblähtem Zustand mindestens einen Verdichterraum auf, wobei die mindestens eine Membran den mindestens einen Verdichterraum zur mindestens einen Medienkammer abdichtet, und
- der Hochdruck-Verdichter mindestens einen ersten in den Verdichterraum mündenden Anschluss aufweist,
- der mindestens eine erste Anschluss mit dem Niederdruck-Gas- oder -Gasgemisch-Vorrat und dem Hochdruck-Gas- oder - Gasgemisch-Vorrat über zugehörige Leitungen und korrespondierende Förder- und/oder Steuermittel verbunden ist, so dass ein Gas oder Gasgemisch aus dem Niederdruck-Gas- oder -Gasgemisch-Vorrat in den mindestens einen Verdichterraum und aus dem mindesten einen Verdichterraum in den Hochdruck-Gas- oder -Gasgemisch-Vorrat einbringbar ist, und
- der Hochdruck-Verdichter mindestens einen zweiten in die mindestens eine Medienkammer mündenden Anschluss aufweist,
- der mindestens eine zweite Anschluss mit dem Medienvorrat über zugehörige Leitungen und korrespondierende Förder- und/oder Steuermittel verbunden ist, so dass ein inkompressibleres Medium aus dem Medienvorrat über den mindestens einen zweiten Anschluss in die mindestens eine Medienkammer und aus der mindestens einen Medienkammer in den Medienvorrat einbringbar ist,
- das inkompressiblere Medium über zugehörige Förder- und/oder Steuermittel mit Druck beaufschlagbar ist, so dass eine Verformung der mindestens einen Membran und hierüber eine Komprimierung des in dem mindestens einen Verdichterraums aufgenommenen Gas oder Gasgemischs erreichbar ist, wozu Leitungen zu und von dem Niederdruck-Gas- oder -Gasgemisch-Vorrat, dem Hochdruck-Gas- oder - Gasgemisch-Vorrat und dem Medienvorrat über korrespondierende Steuermittel abschließbar sind.

In vorteilhafter Ausgestaltung des Verdichtersystems kann der Medienkreislauf und das darüber geführte und/oder geförderte Medium zumindest im Bereich des mindestens einen zweiten Anschluss beheizbar und/oder klimatisierbar sein. Vorteilhaft wird so eine Viskosität des inkompressibleren Mediums erreicht, um beim Einströmen in die mindestens eine Medienkammer über den mindestens einen zweiten Anschluss keinen Gegendruck auf die Fördermittel zu erzeugen.

In einer Vorteilhaften Ausgestaltung des Verdichtersystems kann die Druckbeaufschlagung des Mediums innerhalb der mindestens einen Medienkammer über die Fördermittel ausgeführt werden, welche das inkompressiblere Medium in die mindestens eine Medienkammer fördern. Die Fördermittel sind bspw. als Kolben und/oder als Pumpe ausgeführt. Besonders vorteilhaft ist, wenn ein Fördermittel als Pumpe ausgeführt ist, so dass der Kolben vollständig entfallen kann. Bei derartig vorteilhafter Ausgestaltung kann ein System ohne Kolben als Förder- und/oder Druckbeaufschlagungsmittel zum Einsatz kommen.

Das System bietet die Möglichkeit zur Hochdruck-Verdichtung eines Gases oder Gasgemischs mit mindestens einem Hochdruckverdichter, durch die Auslenkung der mindestens einen Membran.

Weitere Vorteile, Merkmale und Ausgestaltungsmöglichkeiten ergeben sich aus der nachfolgenden Figurenbeschreibung eines nicht einschränkend zu verstehenden Ausführungsbeispiel.

### Kurzbeschreibung der Figuren

In den Figuren zeigt:
- Fig. 1:: eine Schnittdarstellung eines Hochdruck-Verdichters mit einer Membran;
- Fig. 2:: eine schematische Darstellung eines Verdichtersystems mit einem Hochdruck-Verdichter gemäß Fig. 1;
- Fig. 3-6:: eine schematische Darstellung der Prozessabfolge eines Zyklus der Hochdruckverdichtung in dem Verdichtersystem gemäß Fig. 2; und
- Fig. 7:: ein Ablaufdiagramm zur Hochdruck-Verdichtung in einem Verdichtersystem.

In den Zeichnungen mit gleichen Bezugszeichen versehene Elemente entsprechen im Wesentlichen einander, sofern nichts anderes angegeben ist. Darüber hinaus wird darauf verzichtet, Bestandteile zu zeigen und zu beschreiben, welche nicht wesentlich zum Verständnis der hierin offenbarten technischen Lehre sind. Im Weiteren werden nicht für alle bereits eingeführten und dargestellten Elemente die Bezugszeichen wiederholt, sofern die Elemente selbst und deren Funktion bereits beschrieben wurden oder für einen Fachmann bekannt sind.

### Ausführliche Beschreibung anhand einer Ausführform

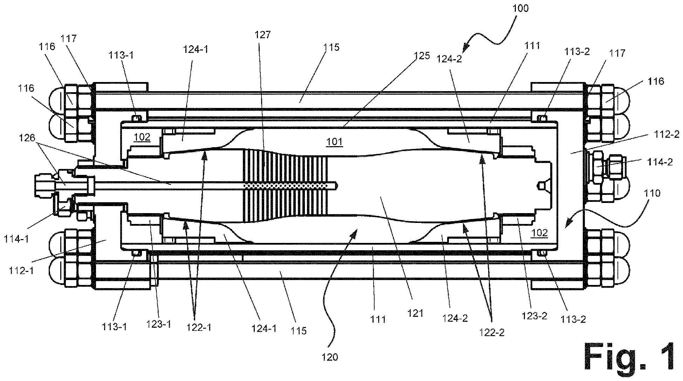

Fig. 1 zeigt eine Schnittdarstellung eines Hochdruck-Verdichters 100. Der Hockdruck-Verdichter 100 dient zur Komprimierung eines Gases, wie bspw. Wasserstoff, oder anderer Gasgemische, wobei es sich um eine mögliche Ausführung der hierin offenbarten technischen Lehre handelt. Die gezeigte und nachfolgend beschriebene Ausführung ist daher nicht limitierend und kann zusätzlich hierin angegebene Merkmale oder angegebene Alternativen aufweisen.

Der in Fig. 1 dargestellte Hochdruck-Verdichter 100 besteht aus einer Verdichterbaugruppe 120 und einem mehrteilig ausgeführten Druckbehälter 110, der die Verdichterbaugruppe 120 sowie eine Medienkammer 102 umgibt.

Der Druckbehälter 110 ist im wesentlichen zylinderförmig ausgeführt, und weist zwei gegenüberliegende Flanschplatten 112-1, 112-2 auf. Zwischen den Flanschplatten 112-1, 112-2 ist eine Gehäusehülse 111 angeordnet. Beide Flanschplatten weisen, im zusammengebauten Zustand an den gegenüberliegenden Seiten eine konzentrisch umlaufende Ausnehmung auf, worin die Gehäusehülse 111 formschlüssig, abdichtend einführbar ist. Innerhalb der konzentrisch umlaufenden Ausnehmung ist eine zusätzliche Abdichtung 113-1, 113-2, bspw. einen O-Ring, vorgesehen sein. Weiterhin weisen die Flanschplatten außerhalb der Ausnehmung, welche zur Aufnahme der Gehäusehülse 111 dient, äquidistante Bohrungen entlang der Flanschkontur auf. Die sich gegenüberliegenden, durch die Gehäusehülse 111 beabstandeten, Flanschplatten 112-1, 112-2 sind im montierten Zustand so ausgerichtet, dass die Bohrungen deckungsgleich positioniert sind, so dass Stangen 115, welche Bolzen, Gewindestangen oder Schrauben sein können, durch diese Bohrungen führbar sind. Die Länge der Stangen ist so gewählt, dass sie zu beide Enden des Druckbehälters 111 über die Flanschplatten 112-1, 112-2 hinausragen, dabei weisen die überstehenden Enden der Stangen jeweils ein Gewinde auf. Auf die Enden werden Muttern 116 und Distanzscheiben 117 geführt, womit die Flansche 112-1, 112-2 mit der Gehäusehülse 111 kraft- und formschlüssig sowie gasdicht eine Medienkammer 102 einschließen. Einer der Flansche 112-1, 112-2 weist eine zentrische Bohrung auf, worin der Konturstab 121, welcher die Verdichterbaugruppe 120 aufnimmt, abdichtend positioniert ist. An den Flanschplatten 112-1, 112-2 sind weitere Bohrungen zum Zuführen eines Mediums, das zum Komprimieren eines Gases oder Gasgemischs dient, vorgesehen. Als Gas oder Gasgemisch kann z.B. Wasserstoff eingesetzt werden.

Die Flanschplatten 112-1, 112-2 sowie die Gehäusehülse bestehen aus einem Edelstahl der Gruppe 316 L

Die Verdichterbaugruppe 120 ist entlang eines Konturstabes 121 angeordnet, wobei der Konturstab 121 an einem Endbereich mit einer der beiden Flanschplatten 112-1, 112-2 in Verbindung steht. An diesem Ende des Konturstabs 121 ist mindestens ein Anschluss 126 vorgesehen, welcher der Zu- und Abfuhr des zu komprimierende Gases oder Gasgemischs dient. Der Konturstab 121 ist im Wesentlichen ein zylinderförmiger Stab, welcher sich nahezu über die gesamte Länge des Druckbehälters 110 erstreckt.

Ausgehend von der Anschlussseitigen Innenwand der Flanschplatte 112-1 weist der Konturstab 121 ein Gewinde und einen aufweitenden konischen Bereich 122-1 auf, in der Mitte des Druckbehälters 110 weist der Konturstab 121 einen konkaven Bereich auf, zum freien Ende des Konturstabs hin, weist dieser einen einschnürenden konischen Bereich 122-2 sowie ein weiteres Gewinde auf. Der Anschluss 126, welche der Gas- oder Gasgemischzu- und -abfuhr dient, ist als Bohrung ausgeführt und erstreckt sich zentrisch, innerhalb des Konturstabs 121. Entlang des Umfangs, zwischen dem aufweitend und dem einschnürend konischen Bereich 122-1, 122-2 sind weitere Bohrungen 127 vorhanden, diese gehen von dem Anschluss 126 aus und münden in die Verdichterkammer 101. Die Verdichterkammer 101 wird über eine Membran 125 aufgespannt, Fig. 1 zeigt die Hochdruck-Verdichtereinheit 100 in einem aufgeblähten Zustand.

Die Membran 125 ist schlauchförmig, in weiteren Ausführformen ist die Membran 125 ein Schlauchabschnitt oder ein Schlauchsegment.

Die Membran 125 besteht aus einem polymerisierten Material, in vorteilhafter Ausgestaltung aus einem Elastomer wie z.B. Ethylen-Propylen-Dien-Monomer, Fluorkarbon-Kautschuk.

Die Membran 125 erstreckst sich von dem sich aufweitenden konischen Bereich 122-1 bis zum verjüngenden konischen Bereich 122-2 des Konturstabs 121. Die Membran 125 wird über die Konen 122-1, 122-2 geführt und mithilfe von aufschiebbaren Klemmstücken 124-1, 124-2, welche eine Bohrung, komplementär der Konen 122-1, 122-2 des Konturstabs 121, aufweisen, verbunden. Die Klemmstücke 124-1, 124-2, sind spiegelsymmetrisch auf dem Konturstab 121 angeordnet. Mithilfe von Spannmuttern 123-1, 123-2, welche auf den Gewinden, an den innenliegenden Randbereichen des Druckbehälters 110 auf dem Konturstab 121 vorgesehen sind, werden die Klemmstücke 124-1, 124-2 auf dem Konturstab 121 fixiert und eine Flächenpressung erzeugt, die die Membran 125 kraftschlüssig positioniert.

In einem Ausgangszustand liegt die Membran 125 vollständig am Konturstab 121 an (nicht in Fig. 1 dargestellt). In einem aufgeblähten Zustand ist die Membran 125 in Kontakt mit der Innenwand der Gehäusehülse 111. Bei der Hochdruckverdichtung wird die Membran 125 verformt, so dass diese kontinuierlich von einer and der Innenwand der Gehäusehülse 111 anliegenden Position, in Anlage mit dem Konturstabs 121 kommt.

Um abrupte Querschnittsübergänge der Membran 125 im aufgeblähten Zustand zu vermeiden sind die sich gegenüberliegenden innenliegenden Stirnflächen der hülsenförmigen Klemmstücke 124-1, 124-2 mit einer umlaufenden Fase versehen. In einer vorteilhaften Ausgestaltung der Fase weist diese Radien auf, so dass der Übergang von Klemmstück 124-1, 124-2 zu Gehäusehülsen-Innenwand nahezu stetig verläuft.

Der Außendurchmesser der hülsenförmig ausgeführten Klemmstücke 124-1, 124-2 ist nahezu gleich dem Innendurchmesser der Gehäusehülse 111, damit das Medium, welches zur Kompression des Gases oder Gasgemischs dient in die Medienkammer 102 einströmen kann sind die Mantelflächen der Klemmstücke 124-1, 124-2 mit Aussparungen versehen. In vorteilhafter Ausgestaltung der Klemmstücke 124-1, 124-2 sind auch rotationssymmetrische angeordnete Durchgangsbohrungen denkbar.

Damit lässt sich je nach Ausbildung des Hochdruck-Verdichters 100 und dessen Bestandteilen eine Anpassung des Verdichtungsverhältnisses von Gasen bzw. Gasgemischen erreichen. Insbesondere ist die Elastizität der Membran 125 maßgeblich für die Verdichtung. Je größer die Elastizität, desto größer ist die Verdichtung.

Zur Verformung der Membran 125 für die Hochdruckverdichtung eines in den Verdichterraum 101 eingebrachten Gases oder Gasgemischs wird ein Medium unter Druck in die Medienkammer 102 eingebracht, welches eine geringere Kompressibilität als das zu verdichtende Gas oder Gasgemisch aufweist. Damit wird erreicht, dass der Druck über das Medium auf die Membran 125 einen entsprechend hohen Druck auf das Gas oder Gasgemisch ausübt, welches dann komprimiert bzw. verdichtet wird. Bspw. kann als inkompressibles Medium Wasser oder ein Hydraulik-Öl verwendet werden.

### Systembeschreibung

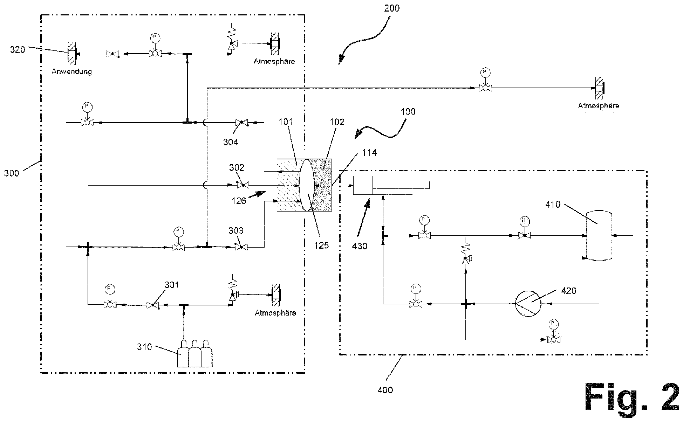

Fig. 2 zeigt eine schematische Darstellung eines Verdichtersystems 200 mit einem Hochdruck-Verdichter 100 gemäß der Ausführung von Fig. 1.

In weiteren nicht dargestellten Ausführungen kann ein Verdichtersystem 200 auch mit einer Abwandlung des in Fig. 1 gezeigten Hochdruck-Verdichters 100 betrieben werden, der unter die hierin beschriebene technische Lehre fällt. Schließlich kann ein Verdichtersystem 200 grundsätzlich auch mehrere Hochdruck-Verdichter 100 aufweisen, die bspw. parallel oder in Reihe geschaltet sind.

Das Verdichtersystem 200 weist neben dem Hochdruck-Verdichter 100 Leitungen und Steuereinrichtungen sowie Ventile und einen Kolben 430 sowie einen Medienvorrat 410 auf, in dem ein Medium aufgenommen ist, welches der Komprimierung des Gases oder Gasgemischs dient. Der Medienvorrat 410, der Kolben 430 und eine Pumpe 420 sind Teil eines Medienkreislaufs 400, der wiederum Bestandteil des Verdichtersystems 200 ist.

Das Verdichtersystem 200 weist zudem einen Gas- oder Gasgemisch-Kreislauf 300 auf, der neben den Leitungen für die Zu- und Abfuhr des Gases oder Gasgemischs Steuereinrichtungen, Ventile, einen Vorrat 310, in dem das Gas oder Gasgemisch bei verhältnismäßig geringem Druck von mindestens 10 bar für die Hochdruckverdichtung bevorratet wird, und eine Anbindung an einen Hochdruck-Gas- oder -Gasgemisch-Vorrat 320 auf, der in Fig. 2 bis Fig. 6 dargestellte Hochdruck-Gas- oder - Gasgemisch-Vorrat 320 kann auch eine beliebige Anwendung sein.

Das Verdichtersystem 200 weist ferner Überdruckventile auf, die beim Überschreiten von kritischen, einstellbaren Drücken im System einen Gasaustritt in die Atmosphäre ermöglichen. In dem gezeigten Ausführungsbeispiel des Verdichtersystems 200 erfolgt eine Verdichtung von Wasserstoff als Gas ausgehend von einem Druck von mindestens 10 bar im Niederdruck Gas- oder - Gasgemisch-Vorrat 310 bis auf ca. 1200 bar, so dass dem Hochdruck-Gas- oder -Gasgemisch-Vorrat 320, das Gas- oder Gasgemisch mit einem Druck von ca. 1200 bar zur Verfügung gestellt wird.

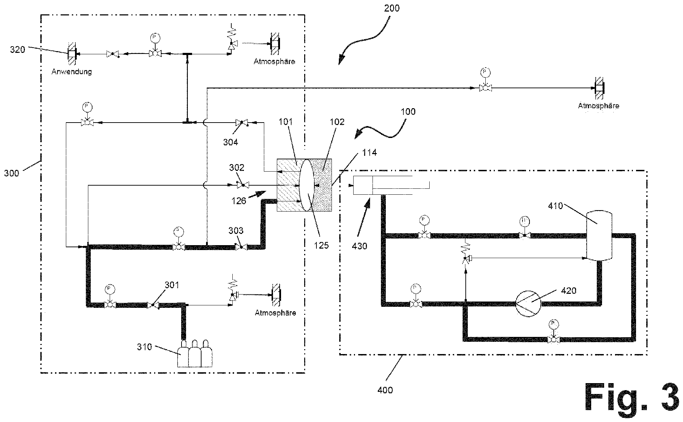

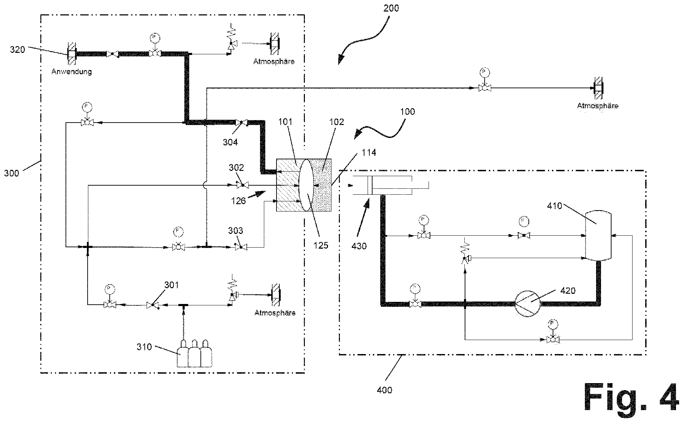

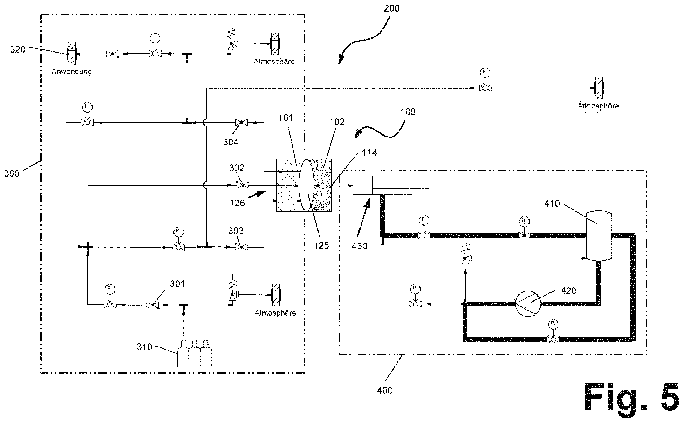

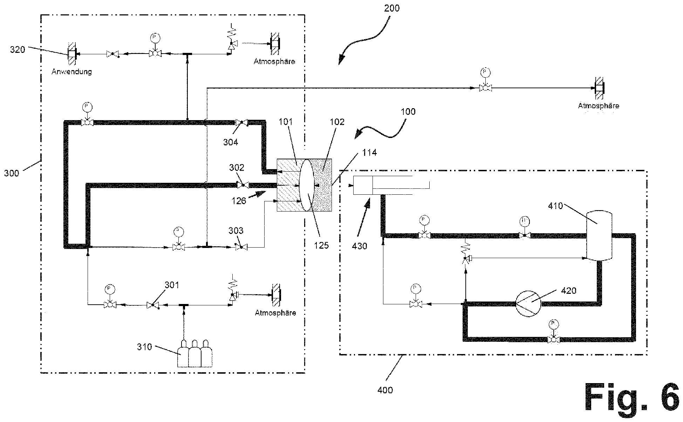

Der Verdichtungsablauf des Gases oder Gasgemischs im Betrieb des Verdichtersystems 200 über den Hochdruck-Verdichter 100 verläuft in vier zyklisch wiederkehrenden Schritten. Fig. 3 zeigt das Befüllen des Hochdruck-Verdichters 100 mit einem Niederdruck-Gas oder -Gasgemisch, im Anschluss an das Befüllen des Verdichters 100 wird in einem nächsten Schritt das Gas oder Gasgemisch verdichtet. Fig. 4 beschreibt den Hub des Komprimierten Gases oder Gasgemischs in des Hochdruck-Gas- oder -Gasgemisch-Vorrat 320. Die Figuren 5 und 6 beschreiben Schritt 1 und 2 zur Druckentlastung des Hochdruck-Verdichters 100.

### Füllen des Hochdruck-Verdichters 100 (Fig. 3)

Der Verdichterraum 101 des Verdichterbaugruppe 120 wird mit einem Gas oder Gasgemisch aus dem Niederdruck-Vorrat 310 gefüllt. Hierzu wird das Ventil 301 vom Niederdruck-Vorrat 310 und ein weiters Ventil 303 geöffnet, so dass über den Anschluss 126 eine Gaszufuhr in den Verdichterraum 101 erfolgt. Im Niederdruck-Vorrat 310 ist Gas mit einem Druck von mindestens 10 bar gespeichert. Die Membran 125 bläht sich dabei in Richtung der Gehäusehülsen-Innenwand aus, dabei pumpt die Pumpe 420 im Medienkreislauf 400 für diesen Schritt das Medium, welches sich noch in der Medienkammer 102 des Druckbehälters 110 befindet, zurück in Medienvorrat 410 für das Kompressionsmedium.

Eine Entlastungsleitung des Medienkreislaufs 400 vom Zylinder des Kolbens 430 ist geöffnet und durch den höheren Druck auf der Gas-Seite wird die Membran 125 vollständig an die Innenwand der Gehäusehülse 111 angelegt sowie der Kolben des Kolbens 430 in seine Ausgangslage bewegt.

### Komprimieren des Gases oder des Gasgemischs und Hub in den Hochdruck-Gas- oder -Gasgemisch-Vorrat (Fig. 4)

Nachdem die Membran 125 vollständig in Anlage an die Innenwand der Gehäusehülse 111 des Hochdruck-Verdichters 100 gebracht ist, wird das Ventil 301 und das Ventil 302 geschlossen, das Ventil 304 zum Hochdruck-Gas- oder -Gasgemisch-Vorrat 320 wird geöffnet. Parallel dazu wird im Medienkreislauf 400 der Kreislauf zurück in den Medienvorrat 410 sowie die Entlastungsleitung geschlossen. Das Medium wird mit der Pumpe 420 aus dem Medienvorrat 410 abgeführt, und dem Kolben 430 hinter dem Kolbenkopf zugeführt. Das inkompressiblere Medium, welches sich vor dem Kolbenkopf des Kolbens 430 befindet, wird über den mindestens einen Anschluss 114 in die Medienkammer 102 des Hochdruck-Verdichters 100 gedrückt, dabei wird die Membran 125 in Anlage mit dem Konturstab 121 gebracht. Diese Volumenänderung sorgt für eine Komprimierung des Gases oder Gasgemischs und damit zu einer Druckerhöhung in dem Hochdruck-Gas- oder -Gasgemisch-Vorrat 320.

### Schritt 1 zur Druckentlastung des Hochdruck-Verdichters 100 (Fig. 5)

Das Ventil 304 zum Hochdruck-Gas- oder -Gasgemisch-Vorrat 320 wird geschlossen. Die Leitung im Medienkreislauf 400 und die Entlastungsleitung, welche beide zurück in den Medienvorrat 410 führen werden geöffnet. Durch den anliegenden Druck auf der Gas-Seite des Hochdruck-Verdichters 100 wird der Kopf des Kolbens 430 in Abhängigkeit vom vorherrschenden Druck ein Stück in seine Ausgangslage zurückgedrückt und das entweichende Medium im Medienvorrat 410 aufgefangen.

### Schritt 2 zur Druckentlastung des Hochdruck-Verdichters 100 (Fig. 6)

Die Entlastungsleitung zum Medienvorrat 410 bleibt geöffnet und die Pumpe 420 pumpt weiter in den Medienvorrat 410 zurück. Das Ventil 302 zur Druckentlastung auf der Gas-Seite wird geöffnet. Anschließend kann das Ventil 303 wieder geöffnet und das Ventil 302 zur Druckentlastung geschlossen werden, um eine erneute Gaszufuhr in den Verdichterraum 101 des Hochdruck-Verdichters 100 durchzuführen.

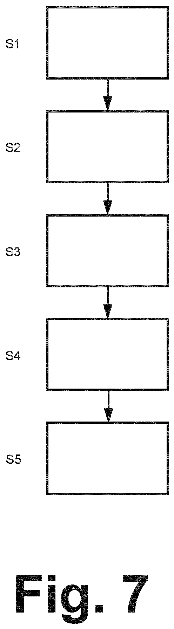

Fig. 7 zeigt ein Ablaufdiagramm der zyklisch abfolgenden Schritte S1 - S5 zur Hochdruck-Verdichtung in einem Verdichtersystem 200, welches einen Hochdruck-Verdichter 100 aufweist.

In einem ersten Schritt S1 erfolgt das Füllen des Hochdruck-Verdichters 100 aus dem Vorrat 310 (siehe Fig. 3). Hierzu werden die entsprechenden Ventile geöffnet bzw. geschlossen.

In Schritt S2 erfolgt die Kompression des Gases und der Hub in den Hochdruck-Gas- oder -Gasgemisch-Vorrat 320 (siehe Fig. 4) aus dem Hochdruck-Verdichter 100.

In Schritt S3 erfolgt ein erster Zwischenschritt zur Druckentlastung des Hochdruck-Verdichters 100 (siehe Fig. 5), wobei die Zufuhr von Gas aus dem Hochdruck-Verdichter 100 zum Hochdruck-Gas- oder -Gasgemisch-Vorrat 320 geschlossen wird.

In Schritt S4 erfolgt ein zweiter Zwischenschritt zur Druckentlastung des Hochdruck-Verdichters 100 (siehe Fig. 6), wobei eine Druckentlastung auf der Gas- oder Gasgemischseite 300 durch Öffnen des Ventils 302 und ein Druckabbau erfolgt.

In Schritt S5 erfolgt ein Umschalten für ein neues Befüllen des Hochdruck-Verdichters 100, wozu das Ventil 303 wieder geöffnet und das Ventil 304 zur Druckentlastung geschlossen werden.

Das Ventil 301, das Ventil 302, das Ventil 303 und das Ventil 304 können als Rückschlagventil ausgebildet sein.

Der vorstehende Ablauf kann stets wiederholt werden, um eine kontinuierliche Hochdruck-Verdichtung für verschiedene Anwendungen oder eine Speicherung des Hoch-Verdichteten Gases oder Gasgemischs zu erreichen.

### Bezugszeichenliste

| | | | |
|---|---|---|---|
| 100 | Hochdruck-Verdichter | 410 | Medienvorrat |
| 101 | Verdichterraum | 420 | Pumpe |
| 102 | Medienkammer | 430 | Kolben |
| 110 | Druckbehälter | | |
| 111 | Gehäusehülse | | |
| 112 | Flanschplatte | | |
| 113-1 | Dichtung | | |
| 113-2 | Dichtung | | |
| 114-1 | Anschluss | | |
| 114-2 | Anschluss | | |
| 115 | Stange | | |
| 116 | Mutter | | |
| 117 | Distanzscheibe | | |
| 120 | Verdichterbaugruppe | | |
| 121 | Konturstab | | |
| 122-1 | Konus | | |
| 122-2 | Konus | | |
| 123-1 | Spannmutter | | |
| 123-2 | Spannmutter | | |
| 124-1 | Klemmstück | | |
| 124-2 | Klemmstück | | |
| 125 | Membran | | |
| 126 | Anschluss | | |
| 200 | Verdichtersystem | | |
| 300 | Gas- oder Gasgemischkreislauf | | |
| 301 | Ventil | | |
| 302 | Ventil | | |
| 303 | Ventil | | |
| 304 | Ventil | | |
| 310 | Niederdruck-Gas- oder Gasgemisch-Vorrat | | |
| 320 | Hochdruck-Gas- oder Gasgemisch-Vorrat | | |
| 400 | Medienkreislauf | | |

## Patentansprüche

1. Hochdruck-Verdichter (100) zur Verdichtung eines Gases oder Gasgemischs, aufweisend mindestens einen
Druckbehälter (110), der mindestens eine Medienkammer (102) und mindestens eine Verdichterbaugruppe (120) umgibt, wobei die mindestens eine Verdichterbaugruppe (120) aus mindestens einem Konturstab (121) und mindestens einer Membran (125) besteht, welche die mindestens eine Medienkammer (102) von mindestens einem
Verdichterraum (101) trennt und der mindestens eine Konturstab (121) mindestens einen ersten Anschluss (126) zur Zu- und/oder Abfuhr eines Gases oder Gasgemischs aufweist, der in den mindestens einen Verdichterraum (101) mündet, wobei der mindestens eine Konturstab Rillen entlang und/oder längs des Umfangs aufweist, welche zu dem mindestens einen ersten Anschluss verlaufen, wobei der mindestens eine Druckbehälter (110) mindestens einen zweiten Anschluss (114-1, 114-2), zur Zu- und/oder Abfuhr eines Mediums aufweist, der in die mindestens eine Medienkammer (102) mündet, wobei die mindestens eine Membran (125) zur Verdichtung des in den mindestens einen Verdichterraums (101) einleitbaren Gases oder Gasgemischs durch Einleitung eines Mediums in die mindestens eine Medienkammer (102) verformbar ist.

2. Hochdruck-Verdichter (100) nach Anspruch 1, **dadurch gekennzeichnet, dass** der mindestens eine Druckbehälter (110) im wesentlichen zylinderförmig ist.

3. Hochdruck-Verdichter (100) nach Anspruch 1 oder 2, **dadurch gekennzeichnet, dass** der mindestens eine Druckbehälter (110) an den Stirnseiten mindestens eine Flanschplatte (112-1, 112-2) und an der Mantelfläche mindestens eine Gehäusehülse (111) aufweist.

4. Hochdruck-Verdichter (100) nach Anspruche 1 bis 3, **dadurch gekennzeichnet, dass** der mindestens eine Konturstab (121) an mindestens einem Ende mit der mindestens einen Flanschplatte (112-1, 112-2) des mindestens einen Druckbehälters (110) verbunden ist.

5. Hochdruck-Verdichter (100) nach Anspruch 1, **dadurch gekennzeichnet, dass** die mindestens eine Membran (125) als Schlauchabschnitt und/oder als Schlauchsegment ausgebildet ist.

6. Hochdruck-Verdichter (100) nach einem der Ansprüche 1 bis 5, **dadurch gekennzeichnet, dass** die mindestens eine Membran (125) auf und/oder an dem mindestens einem Konturstab (121) angeordnet ist.

7. Hochdruck-Verdichter (100) nach einem der vorangegangenen Ansprüche, **dadurch gekennzeichnet, dass** die mindestens eine Membran (125) im Bereich der mindestens zwei Konen (122-1, 122-2), welche an den Endbereichen des mindestens einem Konturstabs (120) innerhalb des mindestens einem Druckbehälters (110) angeordnet sind, über jeweils mindestens ein Klemmstück (124-1, 124-2) gasdicht angebunden ist.

8. Hochdruck-Verdichter (100) nach einem der vorangegangenen Ansprüche, **dadurch gekennzeichnet, dass** die mindestens eine Membran (125) aus einer an dem mindestens einem Konturstab (120) anliegenden Position an die Innenwand der mindestens einen Druckbehälterhülse (111) aufblähbar ist.

9. Hochruck-Verdichter (100) nach einem der Ansprüche 1 bis 8, **dadurch gekennzeichnet, dass** die mindestens eine Membran (125) aus einem polymerisierten Werkstoff besteht.

10. Verdichtersystem (200) zur Hochdruckverdichtung eines Gases oder Gasgemischs, aufweisend mindestes einen Hochdruck-Verdichter (100) nach einem der Ansprüche 1 bis 9, ein Niederdruck-Gas- oder -Gasgemisch-Vorrat (310), ein Hochdruck -Gas- oder -Gasgemisch-Vorrat (320), einen Medienvorrat (410) und Fördermittel zum Fördern eines Gases oder Gasgemischs sowie eines Mediums und Steuermittel zur Regelung des Durchflusses des Gases oder Gasgemischs und/oder des Mediums über Leitungen, wobei
- der Hochdruck-Verdichter (100) einen Druckbehälter (110) aufweist, der mindestens einen Verdichterraum (101) und mindestens eine Medienkammer (102) umgibt, wobei der mindestens eine Verdichterraum (101) und die mindestens eine Medienkammer (102) in dem mindestens einen Druckbehälter (110) über mindestens eine Membran (125) voneinander getrennt sind,
- der Hochdruck-Verdichter (100) mindestens einen ersten, in den mindestens einen Verdichterraum (101) mündenden, Anschluss (126) aufweist,
- der mindestens eine erste Anschluss (126) mit dem Niederdruck-Gas- oder -Gasgemisch-Vorrat (310) und dem Hochdruck-Gas- oder -Gasgemisch-Vorrat (320) über Leitungen sowie Förder- und/oder Steuermittel verbunden ist, so dass ein Gas oder Gasgemisch aus dem Niederdruck-Gas- oder -Gasgemisch-Vorrat (310) in den mindestens einen Verdichterraum (101) und aus dem mindestens einem Verdichterraum (101) in den Hochdruck-Gas- oder -Gasgemisch-Vorrat (320) einbringbar ist,
- der Hochdruck-Verdichter (100) mindestens einen zweiten in die mindestens eine Medienkammer (102) mündenden Anschluss (114-1, 114-2) aufweist,
- der mindestens eine zweite Anschluss (114-1, 114-2) mit dem Medienvorrat über Leitungen sowie Förder- und/oder Steuermittel verbunden ist, so dass ein Medium aus dem Medienvorrat (410) über den mindestens einen zweiten Anschluss (114-1, 114-2) in die mindestens eine Medienkammer (102) und/oder aus der mindestens einen Medienkammer (102) in den Medienvorrat (410) führbar ist, und
- das Medium über Förder- und/oder Steuermittel mit Druck beaufschlagbar ist, so dass eine Verformung der mindestens einen Membran (125) und hierüber eine Komprimierung des in dem mindestens einen Verdichterraum (101) aufgenommenen Gas oder Gasgemischs erreichbar ist, wozu Leitungen zu und von dem Niederdruck-Gas- oder -Gasgemisch-Vorrat (310), dem Hochdruck-Gas- oder -Gasgemisch-Vorrat (320) und dem Medienvorrat (410) über Steuermittel abschließbar sind.

11. Verdichtersystem (200) zur Hochdruckverdichtung eines Gases oder Gasgemischs nach Anspruch 10, **dadurch gekennzeichnet, dass** das Medium, welches zur Verdichtung des Gases oder Gasgemisch dient, eine geringere Kompressibilität als das Gas oder Gasgemisch aufweist.

## Claims

1. High-pressure compressor (100) for compressing a gas or gas mixture, comprising at least one pressure vessel (110) which encloses at least one media chamber (102) and at least one compressor assembly (120), wherein the at least one compressor assembly (120) consists of at least one contour rod (121) and at least one diaphragm (125), which separates the at least one media chamber (102) from at least one compressor chamber (101), and the at least one contour rod (121) has at least one first connection (126) for the supply and/or discharge of a gas or gas mixture, which opens into the at least one compressor chamber (101), wherein the at least one contour rod (121) has grooves along and/or running along the circumference which extend towards the at least one first connection, wherein the at least one pressure vessel (110) comprises at least one second connection (114-1, 114-2) for the supply and/or discharge of a medium, which opens into the at least one medium chamber (102), wherein the at least one diaphragm (125) is deformable for compressing the gas or gas mixture introducible into the at least one compressor chamber (101) by introducing a medium into the at least one medium chamber (102).

2. High-pressure compressor (100) according to claim 1, **characterised in that** the at least one pressure vessel (110) is esseantially cylindrical.

3. High-pressure compressor (100) according to claim 1 or 2, **characterised in that** the at least one pressure vessel (110) comprises at least one flange plate (112-1, 112-2) on its end faces and at least one housing sleeve (111) on its outer surface.

4. High-pressure compressor (100) according to claims 1 to 3, **characterised in that** the at least one contour rod (121) is connected at at least one end to the at least one flange plate (112-1, 112-2) of the at least one pressure vessel (110).

5. High-pressure compressor (100) according to claim 1, **characterised in that** the at least one diaphragm (125) is designed as a section of hose and/or as a hose segment.

6. High-pressure compressor (100) according to any one of claims 1 to 5, **characterised in that** the at least one diaphragm (125) is arranged on and/or attached to the at least one contour rod (121).

7. High-pressure compressor (100) according to any one of the preceding claims, **characterised in that** the at least one diaphragm (125) is connected to the region of the at least two cones (122-1, 122-2), which are arranged at the end regions of the at least one contour rod (120) within the at least one pressure vessel (110), via at least one clamping piece (124-1, 124-2) in each case.

8. High-pressure compressor (100) according to any one of the preceding claims, **characterised in that** the at least one diaphragm (125) can be inflated from a position in contact with the at least one contour rod (121) against the inner wall of the at least one pressure vessel sleeve (111).

9. High-pressure compressor (100) according to any one of claims 1 to 8, **characterised in that** the at least one diaphragm (125) is made of a polymerised material.

10. A compressor system (200) for high-pressure compression of a gas or gas mixture, comprising at least one high-pressure compressor (100) according to any one of claims 1 to 9, a low-pressure gas or gas mixture reservoir (310), a high-pressure gas or gas mixture reservoir (320), a medium reservoir (410) and conveying means for conveying a gas or gas mixture as well as a medium, and control means for regulating the flow of the gas or gas mixture and/or the medium through lines, wherein
- the high-pressure compressor (100) comprises a pressure vessel (110) which surrounds at least one compressor chamber (101) and at least one medium chamber (102), wherein the at least one compressor chamber (101) and the at least one medium chamber (102) are separated in the at least one pressure vessel (110) via at least one diaphragm (125),
- the high-pressure compressor (100) comprises at least one first connection (126) opening into the at least one compressor chamber (101),
- the at least one first connection (126) is connected to the low-pressure gas or gas mixture reservoir (310) and the high-pressure gas or gas mixture reservoir (320) via pipes and conveying and/or control means, so that a gas or gas mixture can be fed from the low-pressure gas or gas mixture reservoir (310) into the at least one compressor chamber (101) and from the at least one compressor chamber (101) into the high-pressure gas or gas mixture reservoir (320),
- the high-pressure compressor (100) has at least one second connection (114-1, 114-2) opening into the at least one medium chamber (102),
- the at least one second connection (114-1, 114-2) is connected to the medium reservoir via pipes and conveying and/or control means, such that a medium can be fed from the medium reservoir (410) via the at least one second connection (114-1, 114-2) into the at least one media chamber (102) and/or from the at least one media chamber (102) into the media reservoir (410), and
- the medium can be pressurised via conveying and/or control means, so that deformation of the at least one diaphragm (125) and, consequently, compression of the gas or gas mixture contained in the at least one compressor chamber (101) can be achieved, for which purpose lines to and from the low-pressure gas or gas mixture reservoir (310), the high-pressure gas or gas mixture reservoir (320) and the medium reservoir (410) can be shut off via control means.

11. Compressor system (200) for high-pressure compression of a gas or gas mixture according to claim 10, **characterised in that** the medium used to compress the gas or gas mixture has a lower compressibility than the gas or gas mixture.

## Revendications

1. Compresseur haute pression (100) destiné à la compression d'un gaz ou d'un mélange gazeux, présentant au moins un récipient sous pression (110) qui entoure au moins une chambre de fluide (102) et au moins un ensemble compresseur (120), l'au moins un ensemble compresseur (120) étant constitué d'au moins une barre profilée (121) et d'au moins une membrane (125), laquelle sépare l'au moins une chambre de fluide (102) d'au moins un espace de compression (101), et l'au moins une barre profilée (121) présentant au moins un premier raccord (126) destiné à l'amenée et/ou à l'évacuation d'un gaz ou d'un mélange gazeux, qui débouche dans l'au moins un espace de compression (101), l'au moins une barre profilée présentant des rainures le long et/ou suivant la circonférence, lesquelles s'étendent jusqu'à l'au moins un premier raccord, l'au moins un récipient sous pression (110) présentant au moins un deuxième raccord (114-1, 114-2) destiné à l'amenée et/ou à l'évacuation d'un fluide, qui débouche dans l'au moins une chambre de fluide (102), l'au moins une membrane (125) pouvant être déformée pour comprimer le gaz ou le mélange gazeux pouvant être introduit dans l'au moins un espace de compression (101) par introduction d'un fluide dans l'au moins une chambre de fluide (102).

2. Compresseur haute pression (100) selon la revendication 1, **caractérisé en ce que** l'au moins un récipient sous pression (110) est essentiellement de forme cylindrique.

3. Compresseur haute pression (100) selon la revendication 1 ou 2, **caractérisé en ce que** l'au moins un récipient sous pression (110) présente, sur les faces frontales, au moins une plaque de bride (112-1, 112-2) et, sur la surface d'enveloppe, au moins une enveloppe de boîtier (111).

4. Compresseur haute pression (100) selon l'une quelconque des revendications 1 à 3, **caractérisé en ce que** l'au moins une barre profilée (121) est reliée, à au moins une extrémité, à l'au moins une plaque de bride (112-1, 112-2) de l'au moins un récipient sous pression (110).

5. Compresseur haute pression (100) selon la revendication 1, **caractérisé en ce que** l'au moins une membrane (125) est réalisée sous la forme d'une section de tuyau et/ou d'un segment de tuyau.

6. Compresseur haute pression (100) selon l'une quelconque des revendications 1 à 5, **caractérisé en ce que** l'au moins une membrane (125) est disposée sur et/ou au niveau de l'au moins une barre profilée (121).

7. Compresseur haute pression (100) selon l'une quelconque des revendications précédentes, **caractérisé en ce que** l'au moins une membrane (125) est raccordée de manière étanche au gaz, dans la zone des au moins deux cônes (122-1, 122-2) qui sont disposés dans les zones d'extrémité de l'au moins une barre profilée (120) à l'intérieur de l'au moins un récipient sous pression (110), au moyen d'au moins une pièce de serrage (124-1, 124-2) respectivement.

8. Compresseur haute pression (100) selon l'une quelconque des revendications précédentes, **caractérisé en ce que** l'au moins une membrane (125) peut être gonflée depuis une position appliquée contre l'au moins une barre profilée (120) jusqu'à la paroi intérieure de l'au moins une enveloppe de récipient sous pression (111).

9. Compresseur haute pression (100) selon l'une quelconque des revendications 1 à 8, **caractérisé en ce que** l'au moins une membrane (125) est constituée d'un matériau polymérisé.

10. Système de compression (200) destiné à la compression à haute pression d'un gaz ou d'un mélange gazeux, présentant au moins un compresseur haute pression (100) selon l'une quelconque des revendications 1 à 9, une réserve basse pression de gaz ou de mélange gazeux (310), une réserve haute pression de gaz ou de mélange gazeux (320), une réserve de fluide (410), des moyens de transport destinés à transporter un gaz ou un mélange gazeux ainsi qu'un fluide, et des moyens de commande destinés à réguler l'écoulement du gaz ou du mélange gazeux et/ou du fluide à travers des conduites, dans lequel
- le compresseur haute pression (100) présente un récipient sous pression (110) qui entoure au moins un espace de compression (101) et au moins une chambre de fluide (102), l'au moins un espace de compression (101) et l'au moins une chambre de fluide (102) étant séparés l'un de l'autre dans l'au moins un récipient sous pression (110) par l'intermédiaire d'au moins une membrane (125),
- le compresseur haute pression (100) présente au moins un premier raccord (126) débouchant dans l'au moins un espace de compression (101),
- l'au moins un premier raccord (126) est relié à la réserve basse pression de gaz ou de mélange gazeux (310) et à la réserve haute pression de gaz ou de mélange gazeux (320) par l'intermédiaire de conduites et de moyens de transport et/ou de commande, de sorte qu'un gaz ou un mélange gazeux puisse être introduit depuis la réserve basse pression de gaz ou de mélange gazeux (310) dans l'au moins un espace de compression (101) et depuis l'au moins un espace de compression (101) dans la réserve haute pression de gaz ou de mélange gazeux (320),
- le compresseur haute pression (100) présente au moins un deuxième raccord (114-1, 114-2) débouchant dans l'au moins une chambre de fluide (102),
- l'au moins un deuxième raccord (114-1, 114-2) est relié à la réserve de fluide par l'intermédiaire de conduites ainsi que de moyens de transport et/ou de commande, de sorte qu'un fluide puisse être acheminé depuis la réserve de fluide (410), via l'au moins un deuxième raccord (114-1, 114-2), dans l'au moins une chambre de fluide (102) et/ou depuis l'au moins une chambre de fluide (102) vers la réserve de fluide (410), et
- le fluide peut être mis sous pression au moyen de moyens de transport et/ou de commande, de sorte qu'une déformation de l'au moins une membrane (125) et, par son intermédiaire, une compression du gaz ou du mélange gazeux reçu dans l'au moins un espace de compression (101) puisse être obtenue, à cet effet des conduites vers et depuis la réserve basse pression de gaz ou de mélange gazeux (310), la réserve haute pression de gaz ou de mélange gazeux (320) et la réserve de fluide (410) pouvant être fermées par l'intermédiare de moyens de commande.

11. Système de compression (200) destiné à la compression à haute pression d'un gaz ou d'un mélange gazeux selon la revendication 10, **caractérisé en ce que** le fluide servant à la compression du gaz ou du mélange gazeux présente une compressibilité inférieure à celle du gaz ou du mélange gazeux.
